# EUROPEAN PATENT SPECIFICATION

(11) **EP 1 966 906 B1**
(45) Date of publication and mention of the grant of the patent: **22.04.2009**
(21) Application number: 06792725.1
(22) Date of filing: 08.08.2006
(51) Int. Cl.: H04B 7/005

(54) **METHODS, BASE STATION AND MOBILE TERMINAL WITH LOW POWER TRANSMISSION MODE**
VERFAHREN, BASISSTATION UND MOBILES ENDGERÄT MIT LOW-POWER-ÜBERTRAGUNGSMODUS
PROCEDES, STATION DE BASE ET TERMINAL MOBILE AVEC MODE DE TRANSMISSION A FAIBLE PUISSANCE

(30) Priority: 28.11.2005 US 739961 P; 08.02.2006 US 349241
(43) Date of publication of application: 10.09.2008
(73) Proprietor: Sony Ericsson Mobile Communications AB, 221 88 Lund (SE)
(72) Inventor: STENMARK, Fredrik, S-211 52 Malmö (SE)
(74) Representative: Andersson, Björn E.
(86) International application number: PCT/EP2006/065136
(87) International publication number: WO 2007/060031

(56) References cited:
- WO-A-01/61873
- US-A1- 2005 096 102
- US-A1- 2005 227 723

## Description

### Technical Field of the Invention

The present invention relates to a mobile terminal for use in power sensitive environments. The mobile terminal uses a reduced or low power transmission mode when operating in power sensitive environment, e.g. inside an airplane. The invention also relates to a method for operating a mobile terminal using a low power transmission mode.

### Description of Related Art

The popularity and use of mobile terminals or mobile telephones has skyrocketed through the past 20 years. People now take their mobile telephones with them everywhere, even when they travel. One place where the use of mobile telephones is, however, restricted is on airplanes and in other power sensitive environment, such as hospitals. The use of mobile telephones in airplanes is restricted because the high power transmissions from the mobile telephone may interfere with the systems of the airplane used during flight.

The airlines have used various airphone systems to provide their passengers with the ability to make telephone calls during a flight. These systems however require the passenger to use one of the telephones provided in the airplane by the airlines. Typically, these systems utilize corded telephones which are wired into the seatbacks of some of the seats in the cabin of the aircraft. Since the telephones are wired into the telephone system high transmission power levels are not a concern. Unfortunately, there are several problems with these telephone systems. Other passengers may be using the telephones when a passenger wishes to make a call or the nearest telephone may be broken or out of service. Furthermore, these telephone systems are very expensive to install and maintain. Finally, passengers, if given the option, would rather use their own mobile telephones.

As mentioned above, the problem with using mobile telephones on an airplane is the possibility of interfering with the flight systems of the airplane. For example, in a communication system, such as GSM (Global System for Mobile Communication), UMTS (Universal Mobile Telecommunications System), EDGE (Enhanced Data for GSM Evolution), GPRS (General Packet Radio Service) systems, a random access burst is transmitted by the mobile telephone on the random access channel (RACH) at initial setup. The random access burst is always transmitted at full power. These full power transmissions, of course, may interfere with the systems of the aircraft. Another problem with these communication systems is that when a first base station has been found, the mobile telephone continues to search for other (better) base stations. So even if a base station were located in an aircraft, the mobile telephone will continue to search for other base stations, which are external to the airplane. For example, a mobile telephone connected to a base station in an airplane might find a base station on the ground and attempt to switch to that base station. All of this searching results in high power transmissions by the mobile telephone that may interfere with flight systems of the airplane.

US 2005 /0 227 723 discloses a method for RF output power control of a mobile terminal by switching between different modes including a reduced-power mode.

Thus, there is a need for a method and apparatus for allowing mobile telephones to operate in power sensitive environments by controlling the power level of transmissions from the mobile telephone.

### Summary of the Invention

According to an embodiment, a method for operating a mobile terminal using a low power transmission mode, comprises transmitting an access request to a base station; receiving, in response to the access request, from the base station a request to transmit using a low power transmission mode; and communicating with the base station using a reduced transmit power level.

The receiving may comprise receiving at least an identification code, which is a request to transmit using the low power transmission mode and which identifies the base station as a special base station.

The receiving may comprise receiving a request to disable a base station search function.

The transmitting may comprise using a predetermined reduced transmit power setting, which is less than the maximum possible transmit power setting, to transmit the access request.

The method may comprise receiving an assigned reduced transmit power level from the base station for subsequent transmission while in the low power transmission mode.

The method may comprise receiving the request to transmit from a special base station, which is a base station in an aircraft.

The method may comprise receiving the request to transmit from a special base station, which is operating in a power sensitive environment.

The method may comprise transmitting the access request using maximum transmit power when said mobile terminal is not in the low power transmission mode. The receiving may comprise receiving a request from the base station to switch to the low power transmission mode when the maximum power is above a predetermined level.

The method may comprise comparing the identification code to at least one identification code stored in the mobile terminal to determine if the received identification code is for a special base station.

The method may comprise disabling search for a base station when a base station is not located using the low power transmission mode.

According to another embodiment, a mobile terminal capable of operating in a low power transmission mode comprises a processor; a transmitter adapted to transmit an access request to a base station; and a receiver adapted to receive, in response to a transmitted access request, from the base station a request to transmit using a low power transmission mode. The transmitter is adapted to communicate with the base station using a reduced power level in the low power transmission mode.

The processor may be adapted to determine whether an identification code, which is received in the request to transmit, identifies a special base station and disable a base station search function when the base station is a special base station.

The transmitter may be adapted to transmit the access request using a predetermined reduced power setting when the mobile terminal is in the low power transmission mode.

The receiver may be adapted to receive an assigned reduced power level from the base station for subsequent transmission while in the low power transmission mode.

The mobile terminal may be a portable or handheld mobile radio communication equipment, a mobile radio terminal, a mobile telephone, a smartphone, a communicator, or any other electronic device with wireless voice communication capabilities.

According to another embodiment, a method for operating a base station in a power sensitive environment comprises receiving an access request from a mobile terminal; determining the power level of the access request; and sending a request for the mobile terminal to enter a low power transmission mode when the power level of the access request is above a predetermined level.

The sending may comprise sending to the mobile terminal an identification code, which identifies the base station as a special base station, which is a request to enter a low power transmission mode.

According to another embodiment, a base station for operating in a power sensitive environment comprises a receiver operative to receive an access request from a mobile terminal; a processor operative to determine the power level of the access request; and a transmitter operative to send a request for the mobile terminal to enter a low power transmission mode when the power level of the access request is above a predetermined level.

The transmitter may be operative to send to the mobile terminal an identification code, which identifies the base station as a special base station, which is a request to enter a low power transmission mode.

According to another embodiment, a computer program product comprises computer program code portions for executing the method for operating a mobile terminal when said computer program code portions are run by an electronic device having computer capabilities.

The computer program product comprising computer program code portions for executing the method for operating a mobile terminal may be comprised on computer readable medium, a record medium, or in a signal.

According to another embodiment, a computer program product comprises computer program code portions for executing the method for operating a base station when said computer program code portions are run by an electronic device having computer capabilities.

The computer program product comprising computer program code portions for executing the method for operating a base station may be comprised on computer readable medium, a record medium, or in a signal.

Further embodiments of the invention are defined in the dependent claims.

Some embodiments of the invention provide for low power transmission mode for mobile terminals when they are in a flight mode.

It is an advantage of embodiments of the invention that the mobile terminal operates without affecting the flight systems of an aircraft while saving power by operating at lower power transmission levels.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features and advantages of embodiments of the invention will appear from the following detailed description, reference being made to the accompanying drawings, in which:

Fig. 1 is a block diagram of a mobile terminal according to one embodiment of the invention;

Fig. 2 is schematic view of a communication system according to one embodiment of the invention;

Fig. 3 is a block diagram of a communications system in an aircraft according to one embodiment of the invention;

Fig. 4 is a flow chart of one embodiment of the method for operating a mobile terminal using a low power transmission mode according to one embodiment of the invention;

Fig. 5 is a block diagram of a base station according to one embodiment of the invention; and

Fig. 6 is a flow chart of one embodiment of the method for operating a base station in a power sensitive environment according to one embodiment of the invention.

### Detailed Description of Embodiments

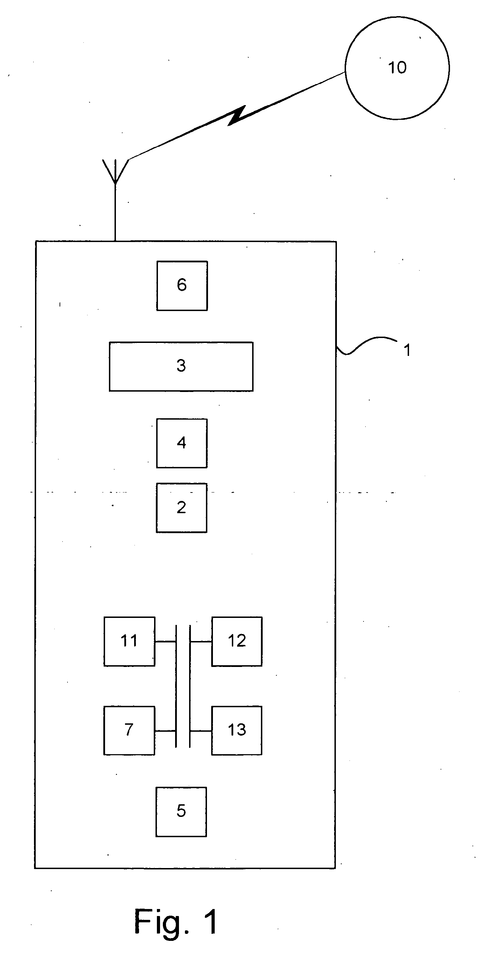

Fig. 1 illustrates a mobile terminal 1. The mobile terminal 1 may comprise a man-machine interface, such as a keypad 2, a display 3, a joystick 4, a microphone 5 and a loudspeaker 6, though which a user may interact with the mobile terminal 1. The mobile terminal 1 may be a portable or handheld mobile radio communication equipment, a mobile radio terminal, a mobile telephone, a communicator, a smartphone or any other electronic device with wireless voice or data communications capabilities. Thus, the mobile terminal 1 may be connected to a network 10.

The mobile terminal 1 may comprise various applications for carrying out functions within the mobile terminal 1. The applications may be provided within an operational platform. Alternatively or additionally, the applications may be provided within a communication platform. The operational platform may comprise systems software run by an application processor, such as a CPU (Central Processing Unit) 7, which may also be referred to as the ACPU (Application CPU). Similarly, the communication platform may comprise both hardware and software for carrying out e.g. communication with the network 10. Thus, also the communication platform may comprise a CPU, which may be referred to as a CCPU, (Communication CPU), for providing various applications. The ACPU and the CCPU may run different operational systems. Also, the communication platform and the operational platform may interact to exchange information.

The mobile terminal 1 further comprises a transmitter 11 and a receiver 12 (or a transceiver) for sending and receiving signals to and from the network 10. The mobile terminal 1 may also comprise a transmit power controller 13 for controlling the transmit power used by the mobile terminal 1. The transmit power controller 13 may form part of the transmitter.

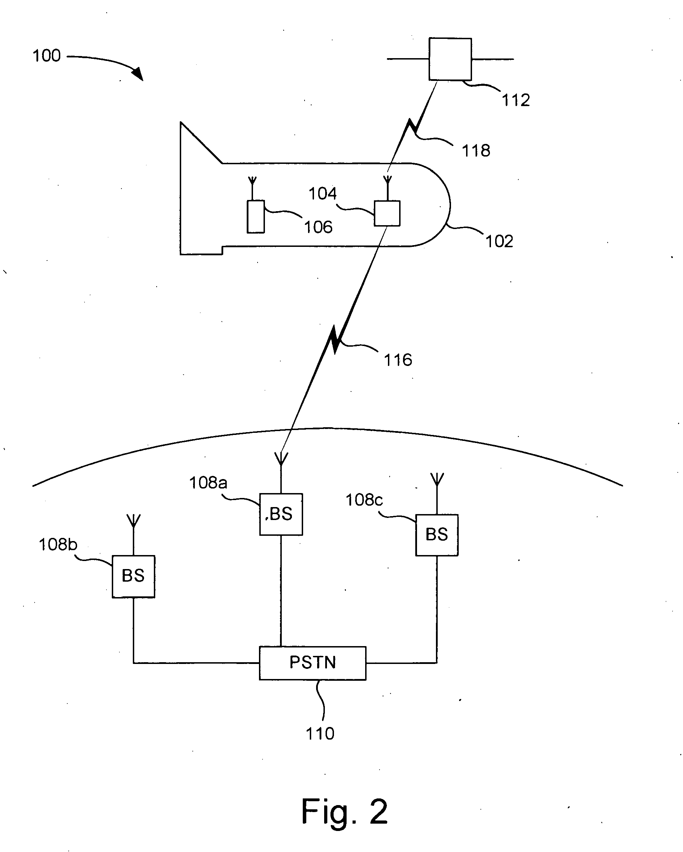

Fig. 2 illustrates a communication system 100, which includes a power sensitive environment, according to one embodiment of the invention. In this illustrative example, the power sensitive environment is inside an aircraft 102, such as an airplane. The invention also pertains to any other power sensitive environment such as an airport, airport terminal, nuclear power plant, a hospital etc., and the invention is not limited thereto.

The communications network 100 may be a cellular communications system, which may be comprised of a plurality of mobile terminals communicating through a plurality of earth-based base stations 108a-c. The base stations may be connected to the public switched telephone network (PSTN) 110 in a known manner. Furthermore, the communications network 100 may also comprise a satellite 112 for further facilitating communication between the mobile terminals.

The aircraft 102 is flying through a plurality of cells (not illustrated), which may be serviced by the earth-based base stations 108a-c. The aircraft 102 comprises an aircraft base station (ABS) 104 and at least one mobile terminal 106. As will be explained below in more detail, the mobile terminal 106 may communicate with devices both inside and external to the aircraft 102 using the communications network 100. The mobile terminals 106 communicate with the aircraft base station 104 using reduced power transmission so as to not interfere with the systems of the aircraft 102. The passenger air-to-ground communications between the aircraft 102 and ground based devices e.g. telephones may be achieved by transmission from the aircraft base station 104 and the ground based base stations 108a-c via a radio communication link 116. Alternatively, the aircraft base station 104 may use a radio communication link 118 to the satellite 112 to facilitate the communications between the mobile terminals 106 and the ground based telephones.

The earth based base stations 108a-c may be base stations that are dedicated for communication with aircrafts. The earth based base stations may be co-located with or operatively connected to base stations for other communications networks, such as a GSM, a UMTS, a GPRS and/or an EDGE communication network.

Reduced transmit power or power level when used herein means a transmit power or power level, which is less than the maximum transmit power or power level, which the mobile terminal 106 is capable of using. The reduced transmit power may be within a certain lower range of the transmit power range useable by the mobile terminal 106. The certain range may e.g. be below 100mW and above 1mW. The maximum allowable transmit power of the reduced transmit power may e.g. be set dependent on the maximum expected attenuation of signals communicated in the environment of the base station.

For a base stations search in a low power transmission mode, the transmit power level may e.g. be 5 mW output power, which is the minimum output power for GSM. Alternatively, the transmit power level for a base station search in the low power transmission mode may be 5 mW output power: These levels are only examples. Other examples may apply, which has to be tested and evaluated in each particular case.

The transmit power may e.g. be reduced by controlling the transmit power applied by a power amplifier of the transmitter. After set up of a communication link, the transmit power may be controlled by the base station.

The radio communication links 116, 118, and the communication links between the base station 104 and the mobile terminal 106 typically comprise at least one pilot signal and a plurality of radio frequency voice channels, but the invention is not limited thereto. Each base station 108a-c broadcasts a pilot signal for the benefit of the aircraft 102. The pilot signal informs the aircraft 102 of various types of information, e.g., voice channel availability, frequencies, etc.

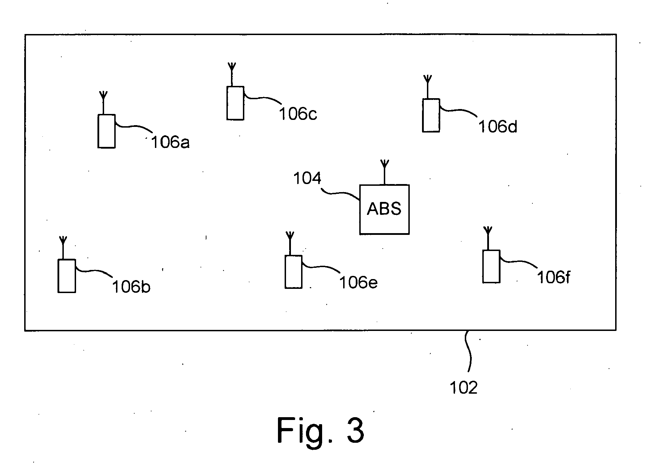

Fig. 3 illustrates a communication system for use in the aircraft 102. As mentioned above, the aircraft communications system comprises an aircraft base station 104 and at least one mobile terminal 106a-f. It will be understood that the aircraft communications system may comprise any number of aircraft base stations 104.

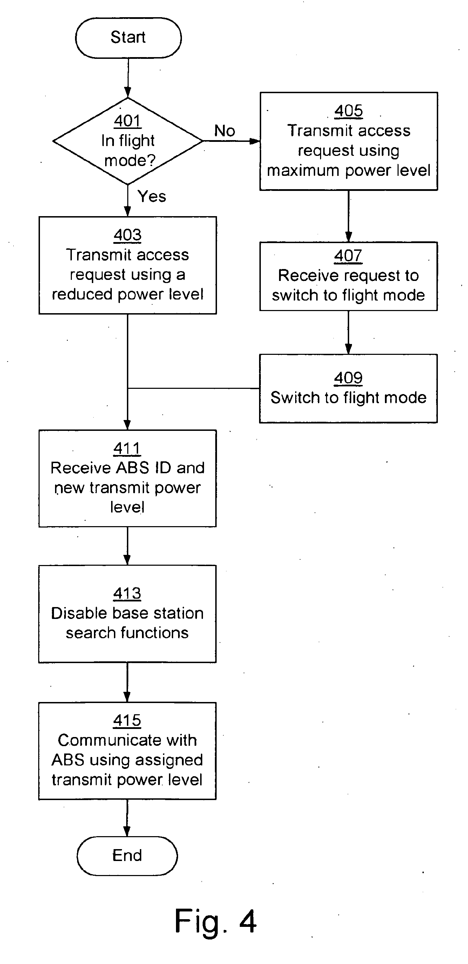

The operation of the mobile terminals 106 in the aircraft 102 will now be described with reference to Fig. 4. The mobile terminal 106, according to one embodiment of the invention, is equipped with a reduced or low power transmission mode or a "flight mode". When the mobile terminal 106 is in the low power transmission mode, the mobile terminal 106 uses a predetermined power setting for transmission, wherein the predetermined power setting is less than the maximum transmit power setting for the individual mobile terminal 106. Thus, when communicating with the base station in the aircraft 102, a reduced transmit power level will be used when the mobile terminal 106 has entered the low power transmission mode. The mobile terminal 106 can be manually put into the low power transmission mode by the user, for example on entry into the aircraft 102. Alternatively, the mobile terminal 106 may be automatically switched to the low power transmission mode when requested to do so by the communications network 100.

A communication link is initially requested, the mobile terminal 106 first determined if it is in the flight mode in step 401. If the mobile terminal 106 is in the flight mode, the mobile terminal 106 will transmit an access request, such as a random access burst, on an access channel, such as random access channel (RACH), using a predetermined power level which is below the maximum power in step 403. Some maximum and minimum power levels for various communication systems are described below.

The maximum transmit power level for a GSM antenna is 2 W (33dBm over 1 mW). The minimum level is 1 mW. A maximum distance between BS at ground level is 35 km.

The maximum transmit power level for DCS/PCS is 1 W (30 dBm over 1 mW). The level is controlled via a power control loop in the mobile terminal.

The maximum transmit power level for Bluetooth is 0.1 W (20 dBm over 1 mW).

The maximum transmit power level for WCDMA is in power class III 0.25 W (24 dBm over 1 mW). Or in power class IV 0.125 W (21 dBm over 1 mW). The minimum transmit power level for WCDMA is as low as 10 nW.

The maximum transmit power level for GPRS is split into classes between 8 W (39 dBm) and 0.8 W (29 dBm). The minimum transmit power level for GPRS is 3.16 mW.

If it is determined that the mobile terminal is not in flight mode, the mobile terminal 106 will transmit a random access burst at full or maximum power in step 405. In one embodiment, the mobile terminal 106 will then receive a request from the aircraft base station 104 to switch to the flight mode in step 407. The request may be displayed on the display 3 so that the user will be informed of the request and the user can manually switch the mobile terminal 106 into the flight mode. Thus, the request may be a text message. Alternatively, the mobile terminal 106 may automatically switch to the flight mode in response to the request in step 409.

The aircraft base station 104 may also transmit on the broadcast channel a new transmission power level for the mobile terminal 106 to use for further transmissions to the aircraft base station 104 in step 411.

In some embodiments, the aircraft base station may transmit an identification code, such as ID: 001 01, which identifies the base station. The Base station may be identified as a special base station. Special base stations may be base stations provided in power sensitive environments and with which the low power transmission mode should be used for communications. The identification code may be a request to transmit using the low power transmission mode. Thus, the access request may be transmitted using the maximum transmit power level, and the identification code is received in response thereto. Then, mobile terminal may communicate using a reduced transmit power level in further transmission.

When the identification code is received by the mobile terminal 106, the mobile terminal identifies the base station as a special base station, e.g., an aircraft base station. For example, the identification code may be compared to identification codes stored in the mobile terminal 106 to see if the identification code is for a special base station. Different identification codes may e.g. be used for base stations in different environments, such as aircrafts, hospitals etc. When the base station is identified as a special base station, the mobile terminal may disable its base station search function so that the mobile terminal 106 will not search for other base stations in step 413. Instead, the mobile terminal 106 will stay connected to the aircraft base station 104 in step 415 until the flight mode is switched off. Furthermore, if the mobile terminal 106 is in the flight mode and does not find a special base station, the mobile terminal 106 does not attempt to find other base stations.

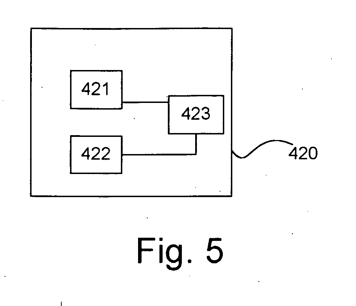

Fig. 5 illustrates one embodiment of a base station 420 according to the invention. The base station comprises a receiver 421, a transmitter 422 and a processor 423. The receiver 421 and the transmitter 422 are operative to communicate with the mobile terminal 106. The processor 423 is operative to perform functions of the base stations, to e.g. determine whether the mobile terminal 106 is transmitting using the low power transmission mode. Also, the processor may be adapted to prepare requests to be transmitted to the mobile terminal 106.

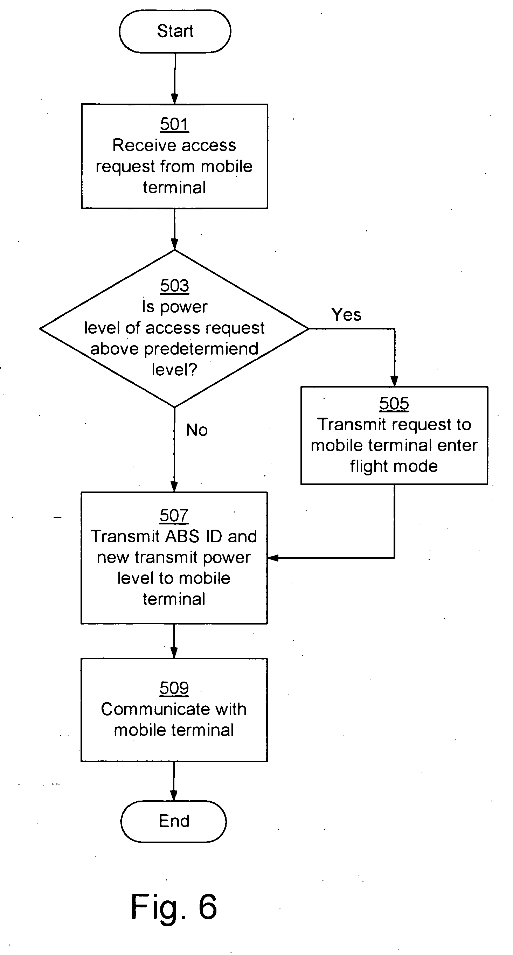

The operation of the aircraft base station will now be described with reference to Fig. 6. When the aircraft base station receives an access request from a mobile terminal 106 in step 501, the aircraft base station 104 first determines, e.g. by measuring or estimating, the transmit power of the received signal in step 503. If the transmission power is above a predetermined level, the aircraft base station sends a request to the mobile terminal 106 to switch to or enter the low power transmission mode in step 505. The aircraft base station 104 may also transmit on the broadcast channel a new transmission power level for the mobile terminal 106 to use for further transmissions to the aircraft base station 104 in step 507. As the request or in addition, the aircraft base station may transmit the identification code, which identifies the base station as a special base station. The aircraft base station then communicates with the mobile terminal 106 and land-based base stations 108a-c or satellite 112 as needed in step 509.

Each of the mobile terminal and the special base station may comprise a processor for performing the determinations described above. For example, the processor of the mobile terminal 106 may be adapted to determine whether the request to transmit using the low power transmission mode comprises any identification code, determining whether the base station is a special base station, etc. Similarly, the processor of the base station may be adapted to determine whether the power level of received signal are above a predetermined level. The predetermined level may be a level corresponding the maximum allowable transmit power level in the low power transmission mode.

When in the low power transmission mode, not only the transmit power for communications with the base station may be restricted. The transmit power for communications with other electronic devices may also be reduced, such as communication using short-range communication capabilities, e.g. Bluetooth and/or WLAN (Wireless Local Area Network) communication capabilities.

The invention may be embedded in a computer program product, which enables implementation of the method and functions described herein. The invention may be carried out when the computer program product is loaded and run in a system having computing capabilities, such as a processor. Computer program, software program, program product, or software, in the present context mean any expression, in any programming language, code or notation, of a set of instructions intended to cause a system having a processing capability to perform a particular function directly or after conversion to another language, code or notation. The computer program product may be stored on a computer readable medium.

A computer program product may comprise computer program code portions for executing the method, as described in the description and the claims, for operating a mobile terminal or the base station when said computer program code portions are run by an electronic device having computer capabilities.

A computer readable medium having stored thereon a computer program product may comprise computer program code portions for executing the method, as described in the description and the claims, for operating a mobile terminal or the base station when said computer program code portions are run by an electronic device having computer capabilities.

The present invention has been described above with reference to specific embodiments. However, other embodiments than the above described are equally possible within the scope of the invention. Different method steps than those described above, performing the method by hardware or software or a combination of hardware and software, may be provided within the scope of the invention. The different features and steps of the invention may be combined in other combinations than those described. The scope of the invention is only limited by the appended patent claims.

## Claims

1. A method for operating a mobile terminal using a low power transmission mode, comprising the steps of:
transmitting an access request to a base station;
receiving, in response to the access request, from the base station at least one identification code, which is a request to transmit using the low power transmission mode; and
communicating with the base station using a reduced transmit power level.

2. The method according to claim 1, wherein said receiving of the at least one identification code comprises identifying the base station as a special base station.

3. The method according to claim 1 or 2, wherein said receiving comprises receiving a request to disable a base station search function.

4. The method according to any of claims 1 to 3, wherein said transmitting comprises using a predetermined reduced transmit power setting, which is less than the maximum possible transmit power setting, to transmit the access request.

5. The method according to any of claims 1 to 4, further comprising the steps of:
receiving an assigned reduced transmit power level from the base station for subsequent transmission while in the low power transmission mode.

6. The method according to any of claims 1 to 5, comprising receiving the request to transmit from a special base station, which is a base station in an aircraft.

7. The method according to any of claims 1 to 5, comprising receiving the request to transmit from a special base station, which is operating in a power sensitive environment.

8. The method according to any of claims 1 to 7, further comprising the steps of:
transmitting the access request using maximum transmit power when said mobile terminal is not in the low power transmission mode; and wherein
said receiving comprises receiving a request from the base station to switch to the low power transmission mode when the maximum power is above a predetermined level.

9. The method according to any of claims 1 to 8, comprising comparing the identification code to at least one identification code stored in the mobile terminal to determine if the received identification code is for a special base station.

10. The method according to any of claims 1 to 9, further comprising the steps of:
disabling search for a base station when a base station is not located using the low power transmission mode.

11. A mobile terminal (1) capable of operating in a low power transmission mode, comprising:
a processor (7);
a transmitter (11) adapted to transmit an access request to a base station; and
a receiver (12) adapted to receive, in response to a transmitted access request, from the base station a request to transmit using a low power transmission mode, which request to transmit comprising at least one identification code
wherein the processor (7) is adapted to determine whether the at least one identification code identifies a special base station and;
wherein the transmitter (11) is adapted to communicate with the base station using a reduced power level in the low power transmission mode.

12. The mobile terminal according to claim 11, in which the processor (7) further is adapted to disable a base station search function when the base station is a special base station.

13. The mobile terminal according to claim 11 or 12, wherein the transmitter is adapted to transmit the access request musing a predetermined reduced power setting when the mobile terminal is in the low power transmissions mode.

14. The mobile terminal according to any of claims 11 to 13, wherein the receive is adapted to receive an assigned reduced power level from the base station for subsequent transmission while in the low power transmission mode.

15. The mobile terminal according to any of claims 11 to 14, wherein the mobile terminal is a portable or handheld mobile radio communication equipment, a mobile radio terminal, a mobile telephone, a smartphone, or a communicator.

16. A method for operating a base station in a power sensitive environment, comprising the steps of:
receiving an access request from a mobile terminal;
determining the power level of the access request; and
sending a request to the mobile terminal in form of an identification code, which identifies the base station as a special base station, upon which request the mobile terminal enters a low power transmission mode when the power level of the access request is above a predetermined level.

17. A base station for operating in a power sensitive environment, comprising:
a receiver (12) operative to receive an access request from a mobile terminal;
a processor (7) operative to determine the power level of the access request; and
a transmitter (11) operative to send a request for the mobile terminal to enter a low power transmission mode when the power level of the access request is above a predetermined level and an identification code, and
wherein the processor (7) is adapted to determine whether the at least one identification code identifies a special base station.

18. A computer program product comprising computer program code portions for executing the method according to any of the claims 1 to 10, when said computer program code portions are run by an electronic device having computer capabilities.

19. The computer program product according to claim 18, wherein the computer program product is comprised on computer readable medium, a record medium, or in a signal.

20. A computer program product comprising computer program code portions for executing the method according to claim 16, when said computer program code portions are run by an electronic device having computer capabilities.

21. The computer program product according to claim 20, wherein the computer program product is comprised on computer readable medium, a record medium, or in a signal.

## Patentansprüche

1. Verfahren zum Betreiben eines Mobilendgerätes unter Verwendung eines Niederleistungsübertragungsmodus, mit den Schritten:
Senden einer Zugangsanfrage an eine Basisstation;
Empfangen in Reaktion auf die Zugangsanfrage von der Basisstation zumindest eines Indentifikationscodes, der eine Anfrage ist, unter Verwendung des Niederleistungssendemodus zu senden; und
Kommunizieren mit der Basisstation unter Verwendung eines verringerten Sendeleistungspegels.

2. Verfahren nach Anspruch 1, wobei das Empfangen des zumindest einen Identifikationscodes ein Identifizieren der Basisstation als eine spezielle Basisstation umfasst.

3. Verfahren nach Anspruch 1 oder 2, wobei das Empfangen ein Empfangen einer Anfrage umfasst, eine Basisstationssuchfunktion zu deaktivieren.

4. Verfahren nach einem der Ansprüche 1 bis 3, wobei das Senden eine vorbestimmte, verringerte Sendeleistungseinstellung umfasst, die weniger als die maximal mögliche Sendeleistungseinstellung ist, um die Zugangsanfrage zu senden.

5. Verfahren nach einem der Ansprüche 1 bis 4, weiter mit den Schritten:
Empfangen eines zugeordneten, verringerten Sendeleistungspegels von der Basisstation für eine nachfolgende Übertragung während in dem Niederleistungssendemodus.

6. Verfahren nach einem der Ansprüche 1 bis 5, mit Empfangen der Anfrage, um von einer speziellen Basisstation zu senden, die eine Basisstation in einem Flugzeug ist.

7. Verfahren nach einem der Ansprüche 1 bis 5, mit einem Empfangen der Anfrage, von einer speziellen Basisstation zu senden, die in einer leistungssensitiven Umgebung arbeitet.

8. Verfahren nach einem der Ansprüche 1 bis 7, weiter mit dem Schritt:
Senden der Zugangsanfrage unter Verwendung einer maximalen Sendeleistung, wenn sich das Mobilendgerät nicht in dem Niederleistungssendemodus befindet; und
wobei das Empfangen ein Empfangen einer Anfrage von der Basisstation umfasst, zu dem Niederleistungssendemodus zu schalten, wenn sich die Maximalleistung oberhalb eines vorbestimmten Pegels befindet.

9. Verfahren nach einem der Ansprüche 1 bis 8, mit einem Vergleichen des Identifikationscodes mit zumindest einem Identifikationscode, der in dem Mobilendgerät gespeichert ist, um zu bestimmen, ob der empfangene Identifikationscode für eine spezielle Basisstation ist.

10. Verfahren nach einem der Ansprüche 1 bis 9, weiter mit den Schritten:
Deaktivieren einer Suche nach einer Basisstation, wenn eine Basisstation unter Verwendung des Niederleistungssendemodus nicht lokalisiert wird.

11. Mobilendgerät (1), das in der Lage ist, in einem Niederleistungssendemodus zu arbeiten, mit:
einem Prozessor (7);
einem Sender (11), der angepasst ist, eine Zugangsanfrage zu einer Basisstation zu senden; und
einem Empfänger (12), der angepasst ist, in Reaktion auf eine gesendete Zugangsanfrage von der Basisstation eine Anfrage zu empfangen, um unter Verwendung eines Niederleistungssendemodus zu senden, wobei die Anfrage zu senden zumindest einen Identifikationscode umfasst,
wobei der Prozessor (7) angepasst ist, zu bestimmen, ob der zumindest eine Identifikationscode eine spezielle Basisstation identifiziert und;
wobei der Sender (11) angepasst ist, mit der Basisstation unter Verwendung eines verringerten Leistungspegels in dem Niederleistungssendemodus zu kommunizieren.

12. Mobilendgerät nach Anspruch 11, bei dem der Prozessor (7) weiter angepasst ist, eine Basisstationssuchfunktion zu deaktivieren, wenn die Basisstation eine spezielle Basisstation ist.

13. Mobilendgerät nach Anspruch 11 oder 12, wobei der Sender angepasst ist, die Zugangsanfrage unter Verwendung einer vorbestimmten verringerten Leistungseinstellung zu senden, wenn sich das Mobilendgerät in dem Niederleistungssendemodus befindet.

14. Mobilendgerät nach einem der Ansprüche 11 bis 13, wobei der Empfänger angepasst ist, einen zugeordneten verringerten Leistungspegel von der Basisstation zur nachfolgenden Übertragung während in dem Niederleistungssendemodus zu empfangen.

15. Mobilendgerät nach einem der Ansprüche 11 bis 14, wobei das Mobilendgerät eine tragbare oder in der Hand gehaltene Mobilfunkkommunikationsausrüstung, ein Mobilfunkendgerät, ein Mobiltelefon, ein Smartphone oder ein Kommunikator ist.

16. Verfahren zum Betreiben einer Basisstation in einer leistungssensitiven Umgebung, mit den Schritten:
Empfangen einer Zugangsanfrage von einem Mobilendgerät;
Bestimmen des Leistungspegels der Zugangsanfrage; und
Senden einer Anfrage an das Mobilendgerät in Form eines Identifikationscodes, der die Basisstation als eine spezielle Basisstation identifiziert, auf die hin das Mobilendgerät in einen Niederleistungsübertragungsmodus geht, wenn der Leistungspegel der Zugangsanfrage oberhalb eines vorbestimmten Pegels liegt.

17. Basisstation zum Betreiben in einer leistungssensitiven Umgebung, mit:
einem Empfänger (12), der betriebsfähig ist, eine Zugangsanfrage von einem Mobilendgerät zu empfangen;
einem Prozessor (7), der betriebsfähig ist, den Leistungspegel der Zugangsanfrage zu bestimmen; und
einem Sender (11), der betriebsfähig ist, eine Anfrage für das Mobilendgerät zu senden, um in einen Niederleistungssendemodus zu gehen, wenn der Leistungspegel der Zugangsanfrage oberhalb eines vorbestimmten Pegels liegt und einen Identifikationscode, und
wobei der Prozessor (7) angepasst ist, zu bestimmen, ob der zumindest einen Identifikationscode eine spezielle Basisstation identifiziert.

18. Computerprogrammprodukt mit Computerprogrammcodeteilen zum Ausführen des Verfahrens nach einem der Ansprüche 1 bis 10, wobei die Computerprogrammcodeteile von einem elektronischen Gerät mit Computerfähigkeiten laufengelassen werden.

19. Computerprogrammprodukt nach Anspruch 18, wobei das Computerprogrammprodukt auf einem computerlesbaren Medium, einem Speichermedium oder in einem Signal umfasst ist.

20. Computerprogrammprodukt mit Computerprogrammcodeteilen zum Ausführen des Verfahrens nach Anspruch 16, wenn die Computerprogrammcodeteile von einem elektronischen Gerät mit Computerfähigkeiten laufengelassen werden.

21. Computerprogrammprodukt nach Anspruch 20, wobei das Computerprogrammprodukt auf einem computerlesbaren Medium, einem Speichermedium oder in einem Signal umfasst ist.

## Revendications

1. Procédé pour faire fonctionner un terminal mobile utilisant un mode de transmission à basse puissance, comprenant les étapes qui consistent :
à transmettre une demande d'accès à une station de base ;
à recevoir de la station de base, en réponse à la demande d'accès, au moins un code d'identification, qui est une demande à émettre utilisant le mode de transmission à basse puissance ; et
à communiquer avec la station de base en utilisant un niveau de puissance de transmission réduit.

2. Procédé selon la revendication 1, dans lequel ladite réception du, au moins un, code d'identification comprend l'identification de la station de base en tant que station de base spéciale.

3. Procédé selon la revendication 1 ou 2, dans lequel ladite réception comprend la réception d'une demande pour invalider une fonction de recherche de station de base.

4. Procédé selon l'une quelconque des revendications 1 à 3, dans lequel ladite émission comprend l'utilisation d'un réglage de puissance d'émission réduit prédéterminé, qui est inférieur au réglage de puissance d'émission maximal possible, pour émettre la demande d'accès.

5. Procédé selon l'une quelconque des revendications 1 à 4, comprenant en outre les étapes qui consistent :
à recevoir de la station de base un niveau de puissance d'émission réduit attribué pour une émission suivante tout en étant dans le mode d'émission à basse puissance.

6. Procédé selon l'une quelconque des revendications 1 à 5, comprenant la réception de la demande à émettre depuis une station de base spéciale, qui est une station de base dans un aéronef.

7. Procédé selon l'une quelconque des revendications 1 à 5, comprenant la réception de la demande à émettre depuis une station de base spéciale, qui fonctionne dans un environnement sensible à la puissance.

8. Procédé selon l'une quelconque des revendications 1 à 7, comprenant en outre les étapes qui consistent :
à émettre la demande d'accès en utilisant la puissance d'émission maximale lorsque ledit terminal mobile n'est pas dans le mode d'émission à basse puissance ; et dans lequel
ladite réception comprend la réception d'une demande depuis la station de base pour passer dans le mode d'émission à basse puissance lorsque la puissance maximale est supérieure à un niveau prédéterminé.

9. Procédé selon l'une quelconque des revendications 1 à 8, comprenant la comparaison du code d'identification à au moins un code d'identification stocké dans le terminal mobile pour déterminer si le code d'identification reçu est pour une station de base spéciale.

10. Procédé selon l'une quelconque des revendications 1 à 9, comprenant en outre l'étape qui consiste :
à invalider une recherche pour une station de base lorsqu'une station de base n'est pas localisée en utilisant le mode d'émission à basse puissance.

11. Terminal mobile (1) capable de fonctionner dans un mode d'émission à basse puissance, comportant :
un processeur (7) ;
un émetteur (11) conçu pour émettre une demande d'accès vers une station de base ; et
un récepteur (12) conçu pour recevoir de la station de base, en réponse à une demande d'accès émise, une demande pour émettre en utilisant un mode d'émission à basse puissance, laquelle demande à émettre comprend au moins un code d'identitication
dans lequel le processeur (7) est conçu pour déterminer si le, au moins un, code d'identification identifie une station de base spéciale ; et
dans lequel l'émetteur (11) est conçu pour communiquer avec la station de base en utilisant un niveau de puissance réduit dans le mode d'émission à basse puissance.

12. Terminal mobile selon la revendication 11, dans lequel le processeur (7) est en outre conçu pour invalider une fonction de recherche de station de base lorsque la station de base est une station de base spéciale.

13. Terminal mobile selon la revendication 11 ou 12, dans lequel l'émetteur est conçu pour émettre la demande d'accès en utilisant un réglage de puissance réduit prédéterminé lorsque le terminal mobile est dans le mode d'émission à basse puissance.

14. Terminal mobile selon l'une quelconque des revendications 11 à 13, dans lequel le récepteur est conçu pour recevoir de la station de base un niveau de puissance réduit attribué pour une émission subséquente tout en étant dans le mode d'émission à basse puissance.

15. Terminal mobile selon l'une quelconque des revendications 11 à 14, lequel terminal mobile est un équipement de communication radio mobile portable ou de poche, un terminal radio mobile, un téléphone mobile, un téléphone à puce ou un communicateur.

16. Procédé pour faire fonctionner une station de base dans un environnement sensible à la puissance, comprenant les étapes qui consistent :
à recevoir une demande d'accès depuis un terminal mobile ;
à déterminer le niveau de puissance de la demande d'accès ; et
à envoyer une demande au terminal mobile sous la forme d'un code d'identification, lequel identifie la station de base en tant que station de base spéciale, demande à la suite de laquelle le terminal mobile passe dans un mode d'émission à basse puissance lorsque le niveau de puissance de la demande d'accès est supérieur à un niveau prédéterminé.

17. Station de base destinée à fonctionner dans un environnement sensible à la puissance, comportant :
un récepteur (12) pouvant fonctionner pour recevoir une demande d'accès depuis un terminal mobile ;
un processeur (7) pouvant fonctionner pour déterminer le niveau de puissance de la demande d'accès ; et
un émetteur (11) pouvant fonctionner pour envoyer une demande pour le terminal mobile afin de le faire passer dans un mode d'émission à basse puissance lorsque le niveau de puissance de la demande d'accès est supérieur à un niveau prédéterminé et un code d'identification, et
dans lequel le processeur (7) est conçu pour déterminer si le, au moins un, code d'identification identifie une station de base spéciale.

18. Produit à programme informatique comportant des parties de code de programme informatique pour l'exécution du procédé selon l'une quelconque des revendications 1 à 10, lorsque lesdites parties de code de programme informatique sont mises en oeuvre par un dispositif électronique ayant des capacités informatiques.

19. Produit à programme informatique selon la revendication 18, lequel produit à programme informatique est constitué sur un support lisible par ordinateur, un support d'enregistrement ou dans un signal.

20. Produit à programme informatique comprenant des parties de code de programme informatique pour l'exécution du procédé selon la revendication 16, lorsque lesdites parties de code de programme informatique sont mises en oeuvre par un dispositif électronique ayant des capacités informatiques.

21. Produit à programme informatique selon la revendication 20, lequel produit à programme informatique est constitué sur un support lisible par ordinateur, un support d'enregistrement ou dans un signal.
